# EUROPÄISCHE PATENTSCHRIFT

(11) **EP 2 102 079 B1**
(45) Veröffentlichungstag und Bekanntmachung des Hinweises auf die Patenterteilung: **22.06.2016**
(21) Anmeldenummer: 07846947.5
(22) Anmeldetag: 01.12.2007
(51) Int. Cl.: B65G 1/137

(54) **KOMMISSIONIERANLAGE UND -VERFAHREN**
COMMISSIONING STATION AND METHOD
DISPOSITIF ET PROCÉDÉ DE COMMISSIONNEMENT

(30) Priorität: 07.12.2006 DE 102006057658
(43) Veröffentlichungstag der Anmeldung: 23.09.2009
(73) Patentinhaber: KUKA Roboter GmbH, 86165 Augsburg (DE)
(72) Erfinder: EBINGER, Armin, 71522 Backnang (DE)
(74) Vertreter: Patentanwälte Funk & Böss GbR
(86) Internationale Anmeldenummer: PCT/EP2007/010458
(87) Internationale Veröffentlichungsnummer: WO 2008/067964

(56) Entgegenhaltungen:
- EP-A- 1 447 355
- US-A- 5 211 528
- US-B1- 6 321 138

## Beschreibung

Die Erfindung betrifft ein Verfahren zum Kommissionieren von Waren unterscheidbarer Warenklassen mit wenigstens zwei Kommissioniereinheiten, wobei die Waren an einem Quellort bereitgestellt und Soll-Mengen von Waren an einem Zielort zusammengestellt werden.

weiterhin wird eine Anlage zur Kommission nieren von Waren unterscheidbarer Warenklassen beschrieben, mit einem Quellort zum Bereitstellen der Waren, einem Zielort zum Zusammenstellen von Soll-Mengen von Waren und mit wenigstens zwei Kommissioniereinheiten.

Aus dem Stand der Technik sind automatische Kommissioniersysteme bekannt, mit welchen eine große Warenanzahl je nach Warenklasse abwechselnd kommissioniert wird. US 5,211,528 beschreibt ein Verfahren gemäß dem Oberbegriff des Anspruchs 1. Bei einem Großteil solcher Systeme ist dabei kein nennenswerter Lagerbestand von zu kommissionierenden Waren vorgesehen, so dass dieselben fortlaufend mit einem Warennachschub versorgt werden müssen, welcher den jeweils in nächster zeit absehbaren Kommissionieraufträgen entspricht. In bestimmten Fällen ist dabei eine Warennachlieferung in einer bestimmten Reihenfolge vonnöten, wie sie sich aus der Reihenfolge der voraussichtlich durchzuführenden Kommissionieraufträge ergibt. Bei Lieferung von größeren Warenmengen müssen aufgrund einer Fehleinschätzung nicht verbrauchte Waren wieder zurücktransportiert werden. Um diese Probleme zu vermeiden, wurden Kommissioniersysteme mit einer leistungsfähigeren Logistik, und insbesondere mit einem in unmittelbarer Nähe betriebenen Pufferlager versehen. Dabei ist nachteilig, dass die Kosten und der Platzbedarf enorm anwachsen.

Bei den meisten vollautomatischen Kommissioniersystemen ist es außerdem üblich, die Ware direkt von einem Quellort mit der Gesamtmenge der zu kommissionierenden waren zu dem Zielort mit den dem Kommissionierauftrag entsprechenden Soll-Mengen weiterzuleiten, so dass die Anzahl der entnommenen Waren zwangsläufig der Anzahl der für den Kommissionierauftrag benötigten Waren entsprechen muss. Dies gilt auch für den Fall kleiner zu kommissionierender Soll-Mengen, was mit dem Nachteil behaftet ist, dass die Kommissioniergeschwindigkeit und Taktzeit erheblich vermindert wird. Das Problem wird noch verstärkt, wenn vor der Warenentnahme von dem Quellort aus Sicherheitsgründen die kleineren Warenmengen mittels Sensoren lokalisiert und/oder untersucht werden müssen. Ferner ist das Entnehmen von Waren aus einem Quellort bei nicht vollständig definierter Warenposition, warengröße, Gewicht oder bei vorhandenen Umverpackungsresten immer mit einem erhöhten Störungsrisiko behaftet, wobei ein Störungsfall sich direkt auf die Durchsatzleistung eines solchen Kommissioniersystems auswirkt.

Der Erfindung liegt die Aufgabe zugrunde, unter Vermeidung der oben genannten Nachteile ein Verfahren zum Kommissionieren von Waren mit einer erhöhten und störungsresistenten Durchsatzleistung und gleichzeitig geringem Platzbedarf und Wartungsaufwand zu realisieren.

Die genannte Aufgabe wird gelöst durch ein Verfahren gemäß Anspruch 1. Die Kommissioniereinheiten weisen dabei vorzugsweise jeweils Roboter auf.

Bei einer Anlage zur Kommissionierung von Waren wird die Aufgabe dadurch gelöst, dass diese wenigstens eine erste Kommissioniereinheit zum Entnehmen von Warenmengen von dem Quellort, wenigstens einen Vermittlungsort, an welchen die Warenmengen weitergeleitet werden, und wenigstens eine zweite Kommissioniereinheit mit Zugriff auf die Waren an wenigstens einem der Vermittlungsorte aufweist.

Grundgedanke der Erfindung ist also, das Entnehmen der Warenmengen in einer ersten Stufe von dem Soll-Mengen abhängigen Kommissionierauftrag in einer zweiten Stufe zu entkoppeln. Dies kann insbesondere dadurch erreicht werden, dass die Anzahl und/oder die Warenklasse(n) von Waren einer jeweils von dem Quellort entnommenen Warenmenge unabhängig von den zu kommissionierenden Soll-Mengen und/oder Warenklassen ist/sind. Dadurch kann der Zeitaufwand im Vergleich zu einem herkömmlichen Kommissionierverfahren erheblich vermindert werden, bei welchem auch kleine Warenmengen einzeln entnommen werden müssen. Bevorzugt werden die Waren im Mehrfachgriff entnommen. Eine entnommene Warenmenge kann jedoch auch aus einem einzelnen Warenartikel gebildet sein, beispielsweise wenn es sich um einen großen oder sperrigen Warenartikel handelt.

Eine vorgegebene oder definierte Anordnung von Waren, ein definiertes Warenmuster, kann auf einer Ausgangs- oder Quellpalette bereits vorhanden sein, z.B. bei Entnahme aus einem Tray. In diesem Fall sollte dieses Muster natürlich nicht zerstört werden, sondern an den Übergabeplatz zur zweiten Stufe dieser zweiten Stufe zur Verfügung gestellt werden.

Zum sicheren Entnehmen der Warenmenge von dem Quellort wird vorgeschlagen, dass vor dem Entnehmen jeweils einer der Warenmengen die Entnahmeposition und/oder die Warenklasse(n) der Waren von der wenigstens einen ersten Kommissioniereinheit ermittelt wird. In einer gattungsgemäßen Anlage weist dabei die wenigstens eine erste Kommissioniereinheit einen Sensor zum Ermitteln der Entnahmeposition und/oder der Warenklasse(n) der Waren auf. In diesem Fall treten die Vorzüge der Erfindung besonders in den Vordergrund, da eine zeitaufwändige Analyse der Waren mittels Sensoren ebenso von einem soll-mengenabhängigen Kommissionierauftrag entkoppelt ist und dieser Prozess durch Heranziehen einer gegebenenfalls möglichst großen Warenmenge beschleunigt wird. Da die Warenmengen an dem jeweiligen Vermittlungsort in einer vorgegebenen Position vorliegen, ist ein weiteres Scannen der Warenmengen von der zweiten Kommissioniereinheit nicht nötig.

Die somit gewonnene Leistungsreserve des Systems kann besonders vorteilhaft dadurch genutzt werden, dass die entnommenen Warenmengen an mehrere unterschiedliche Vermittlungsorte weitergeleitet werden, an welchen jeweils wenigstens eine zweite Kommissioniereinheit auf die Waren zugreift. Dies ermöglicht insbesondere, dass mehrere Kommissionieraufträge parallel durchgeführt werden können, ohne hohen logistischen Aufwand. Erfindungsgemäß kann in dieser Ausgestaltung auch die somit erzielte Redundanz vorteilhaft genutzt werden. So können bei einem Ausfall einer der zweiten Kommissioniereinheit dennoch alle Kommissionieraufträge vollständig ausgeführt werden. Auch bei kurzzeitigem Ausfall einer ersten Kommissioniereinheit entsteht kein Schadensfall. Bei einem Totalausfall derselben kann bei gegebener Baugleichheit eine der zweiten Kommissioniereinheit kurzfristig als Ersatz herangezogen werden.

Zur Erhöhung der Effizienz und Flexibilität der Anlage wird vorgeschlagen, dass neben dem Weiterleiten der entnommenen Warenmengen an wenigstens einen Vermittlungsort, welcher einer vorgegebenen Position entspricht, dieselben in einem vorgegebenen Muster weitergeleitet werden, welches von der Warenklasse und/oder der Reihenfolge des Entnehmens und/oder dem Vermittlungsort der Warenmengen abhängt. Beispielsweise können in einem solchen Muster jeweils aufeinanderfolgend entnommene Warenmengen jeweils unterschiedliche Vermittlungsorte zugeordnet werden.

In einer bevorzugten Ausgestaltung der Erfindung werden die entnommenen Warenmengen von der wenigstens einen ersten Kommissioniereinheit an die wenigstens eine zweite Kommissioniereinheit direkt übergeben. Um das Weiterleiten der entnommenen Warenmengen in die vorgegebene Position an dem Vermittlungsort einfacher zu koordinieren, kann dieses auch über eine Richtstation erfolgen, welche ggf. die Waren in dem vorgegebenen Muster übermittelt. Alternativ kann das Bereitstellen der Waren an dem Quellort und/oder das weiterleiten der entnommenen Warenmengen an den/die Vermittlungsort(e) kontinuierlich, beispielsweise über ein Förderband, erfolgen.

Im erfindungsgemäßen Verfahren ist vorgesehen, dass die wenigstens eine zweite Kommissioniereinheit die an den jeweiligen Vermittlungsort weitergeleiteten Warenmengen in Sortierbereich einordnet. Eine erfindungsgemäße Anlage weist hierzu Sortierbereiche zum Einordnen der weitergeleiteten Warenmengen durch die wenigstens eine zweite Kommissioniereinheit auf. Erfindungsgemäß wird hierdurch die Funktion eines systemeigenen Pufferlagers erfüllt, mit einem Kosten- und Platzersparnis im Vergleich zu Systemen mit einem externen Waren-Pufferlager. Die Waren werden auch hier bevorzugt im Mehrfachgriff entnommen, um insbesondere auch diesen Verfahrensschritt von den sollmengenabhängigen Kommissionieraufträgen zu entkoppeln. Das Einordnen der weitergeleiteten Warenmengen in Sortierbereiche kann in Abhängigkeit der Warenklassen erfolgen, wobei einem oder mehreren Sortierbereichen jeweils eine Warenklasse zugeordnet ist.

Das eigentliche Kommissionieren der Soll-Warenmengen wird erfindungsgemäß in einem weiteren Verfahrensschritt realisiert sein, wobei die wenigstens eine zweite Kommissioniereinheit die Soll-Mengen aus den Waren in den Sortierbereichen zusammenstellt/zusammenstellen. Dabei kann es in Abhängigkeit von den Kommissionieraufträgen notwendig sein, Waren im Einzelgriff aus den jeweiligen Sortierbereichen zu entnehmen. Bevorzugt wird jedoch auch in diesem Fall eine möglichst große Mengen in einem Mehrfachgriff aus den Sortierbereichen ausgelagert.

Um die Wirkung der Sortierbereiche als internes Pufferlager noch flexibler zu gestalten und somit die Effizienz des Kommissionierens weiter zu erhöhen, kann vorgesehen sein, dass das Einordnen und Zusammenstellen der Waren in bzw. aus den Sortierbereichen gemäß einer vorgegebenen Ein- und Auslagerungsstrategie und/oder in Abhängigkeit von den Kommissionieraufträgen erfolgt. Als Ein- und Auslagerungsstrategie kann dabei insbesondere A, B, C-Artikel, Warengleichverteilung, fifo (first in first out) oder Füllgradsregelung vorgesehen sein. Da es möglich ist, die Sortierbereiche durch ein Rechnersystem variabel zu vergeben, können unterschiedlichste Waren und Gebindegrößen kommissioniert werden. Diese Variabilität des Kommissioniersystems kann durch ein Anpassen der Sortierbereiche in Größe und/oder Anzahl und der Übermittlungsmechanismen weiter verstärkt werden.

Da die genannte Effizienzsteigerung von der Anzahl der Sortierbereiche und den Zugriffsmöglichkeiten der zweiten Kommissioniereinheit abhängt, ist in einer äußerst bevorzugten Ausführung vorgesehen, dass jeder der zweiten Kommissioniereinheiten jeweils eigene Sortierbereiche zugeordnet sind. Weiterhin kann auch vorgesehen sein, dass die wenigstens eine erste Kommissioniereinheit auf einen oder mehrere Sortierbereiche Zugriff besitzt. Dabei kann der wenigstens eine Vermittlungsort auch durch einen definierten Ort in einem der Sortierbereiche gebildet sein.

Die Waren können an dem Quellort mittels Quellladungsträgern bereitgestellt werden. Umgekehrt kann das Zusammenstellen der Soll-Mengen der Waren in einem jeweils zugeordneten zielladungsträger erfolgen. Dabei können die Zielladungsträger kontinuierlich, beispielsweise über ein Förderband, an- und/oder abtransportiert werden. Alternativ können die Zielladungsträger von der wenigstens einen zweiten Kommissioniereinheit(en) beispielsweise mittels eines Greifers mitgeführt werden. Durch die geringeren Übertragungswege können auf diese Weise die Übertragungsraten deutlich gesteigert werden. Eine Förderanlage für die Zielladungsträger kann in diesem Fall entfallen oder zumindest einfacher gestaltet werden. Auch eine direkte Übergabe des Zielladungsträgers an einen benachbarten Roboter oder eine andere Anlage kann vorgesehen sein.

In bevorzugter Ausführung ist die wenigstens eine erste Kommissioniereinheit durch jeweils einen Gelenkroboter oder Portalroboter und die jeweils wenigstens zweite Kommissioniereinheit durch jeweils einen Gelenkroboter gebildet. Erfindungsgemäß wird durch weitgehende Baugleichheit der ersten und zweiten Kommissioniereinheit die Ersatzteilhaltung minimiert und somit die Wartung vereinfacht.

Weitere Vorteile und Merkmale der Erfindung ergeben sich aus den Ansprüchen und aus der nachfolgenden Beschreibung, in der ein Ausführungsbeispiel der Erfindung in Bezugnahme auf die Zeichnungen näher erläutert ist. Dabei zeigt
- Fig. 1: eine schematische Darstellung einer erfindungsgemäßen Anlage zur Kommissionierung von Waren in einer Draufsicht; und
- Fig. 2: eine schematische Darstellung der in Fig. 1 gezeigten Anlage zur Kommissionierung von Waren in einer perspektivischen Ansicht.

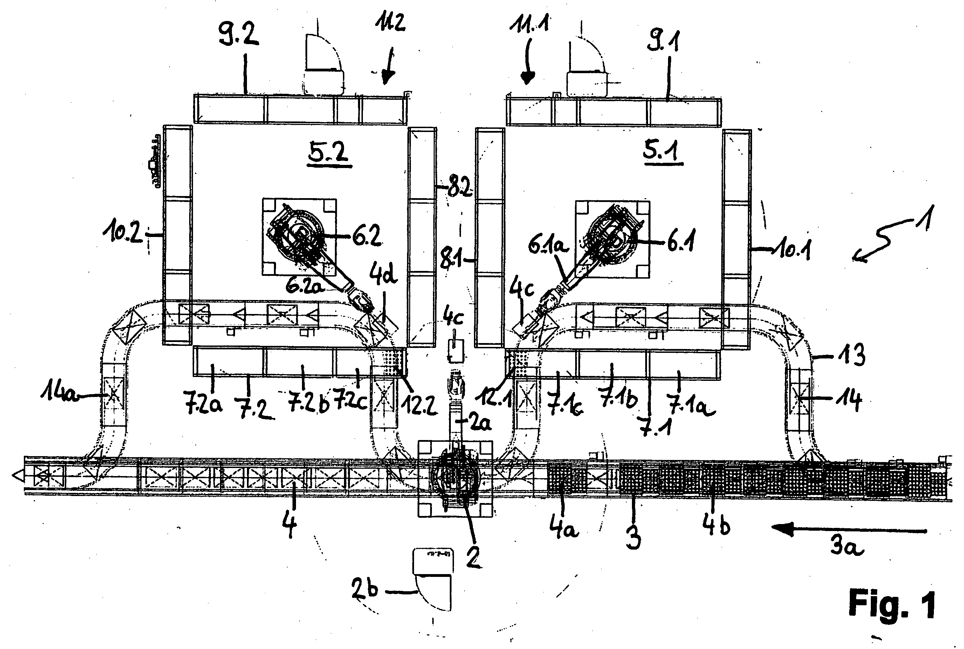

Die Fig. 1 zeigt eine Kommissionieranlage 1 mit einem Roboter 2 in Form eines Gelenkroboters, dem über ein Förderband 3 kontinuierlich in Förderrichtung 3a von rechts nach links Quellladungsträger 4 zu- und wieder abgeführt werden. Die Quellladungsträger 4 sind eingangs mit Waren 4a, 4b bestückt, die jeweils einer von wenigstens zwei unterscheidbaren Warenklassen angehören, wobei die Quellladungsträger 4 mit Waren 4a, 4b unterschiedlicher Warenklassen in willkürlicher oder in wohl definierter Reihenfolge auf dem Förderband 3 transportiert werden. Der Roboter 2 weist einen Sensor und einen Roboterarm 2a auf und ist von einem Schutzzaun 2b mit einem Zugang 2c umgeben.

Spiegelsymmetrisch zu dem Roboter 2 bezüglich einer senkrecht zu dem Förderband 3 angeordneten Symmetrieachse sind zwei Zonen 5.1, 5.2 angeordnet. Diese sind einheitlich aufgebaut und weisen jeweils im Zentrum einen Roboter 6.1, 6.2 auf, der baugleich mit dem Roboter 2 einen Arm 6.1a, 6.1b aufweist und auf allen vier Seiten von aneinandergrenzenden Regalwänden 7.1, 8.1, 9.1, 10.1, 7.2, 8.2, 9.2, 10.2 umgeben ist. Letztere bilden die äußere Begrenzung der Zonen 5.1, 5.2 und weisen in horizontaler Richtung jeweils wenigstens drei voneinander abgesonderte Bereiche 7.1a, 7.1b, 7.1c, 7.2a, 7.2b, 7.2c auf. An jeweils einer Regalwand 9.1, 9.1 ist ein Zugang 11.1, 11.2 zu den Zonen 5.1, 5.2 angeordnet.

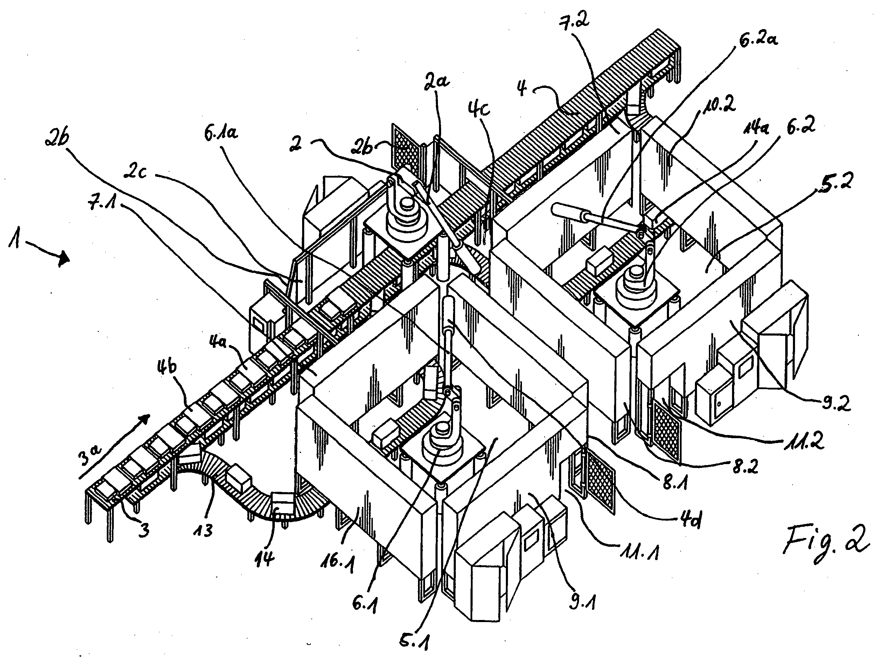

Ein weiteres Förderband 13, das in einer zur Ebene des Förderbandes 3 versehenen Ebene läuft, wie insbesondere Fig. 2 zeigt, führt den Roboter 6.1, 6.2 in den Zonen 5.1, 5.2 kontinuierlich in Förderrichtung 3a von rechts nach links mit Zielladungsträger 14 zu. Hierzu weist das Förderband 13 eine doppelte S-Form auf. Es verläuft in seinen Ein- und Ausgangsbereichen und in seinem an der Position des Roboters 2 angeordneten Mittelbereich genau unterhalb des Förderbands 3. Zwischen diesen Bereichen durchdringt das Förderband 13 die Zonen 5.1, 5.2.

Der Zugriffsbereich des Roboterarms 2a des Roboters 2 umfasst zunächst das Förderband 3 rechts und links desselben. Der Roboter 2 kann Ware direkt an einen der Roboter 6.1, 6.2 übergeben, diesen auf einen zentralen Platz bereitstellen oder bei 7.1c bzw. 8.1c in eines der Regale stellen. Um letzteres zu ermöglichen, liegen die Bereiche 7.1c, 8.1c der Regalwände 7.1, 8.1 der Zone 5.1 und die Bereiche 7.2c, 8.2c der Regalwände 7.2, 8.2 der Zone 5.2 ebenfalls im Zugriffsbereich des Roboters 2. Insbesondere kann der Roboter 2 über den Roboterarm 2a auf zwei Vermittlungsorte 12.1, 12.2, die jeweils im Bereich 7.1c, 7.2c der Regalwand 7.1, 7.2 angeordnet sind, zugreifen. Diese Vermittlungsorte 12.1, 12.2 sind im Rahmen der Bewegungsgenauigkeit des Roboterarms 2a an genau definierter Position.

Die Roboter 6.1, 6.2 haben jeweils mittels ihres Roboterarms 6.1a, 6 Zugriff auf das Förderband 13 mit den Ladungsträgern 14, sowie auf sämtliche Bereiche der Regalwände 7.1, 8.1, 9.1, 10.1, 7.2, 8.2, 9.2, 10.2 in ihrer jeweiligen Zone 7.1, 7.2, insbesondere auch auf den jeweiligen Vermittlungsort 12.1, 12.2.

Die Fig. 2 zeigt die oben beschriebene erfindungsgemäße Kommissionieranlage in perspektivischer Ansicht. Insbesondere wird in dieser Darstellung die Anordnung des Förderbands 13 mit den Zielladungsträgern 14 unterhalb des Förderbands 3 mit den Quellladungsträgern 4 veranschaulicht.

Nachfolgend ist ein erfindungsgemäßes Kommissionierverfahren unter Bezugnahme auf die gattungsgemäße in den Fig. 1 und Fig. 2 gezeigte Kommissionieranlage erläutert: Mittels des Sensors ermittelt der Roboter 2 die genaue Position der Waren 4a, 4b der jeweiligen Quellladungsträger 4 und mittels des rotierbaren und gelenkig bewegbaren Roboterarms 2a entnimmt er Waren 4a, 4b in mehrfacher Stückzahl durch einen Mehrfachgriff von je einem Quellladungsträger 4 an der vorab ermittelten Position. Auch die jeweiligen Warenklassen können so ermittelt werden. Derart werden die Waren in einer vorgegebenen Warenmenge 4c mit einer hohen Genauigkeit und geringen Fehlerquote von dem Förderband 3 gegriffen.

Nach dem Entnehmen einer Warenmenge 4c wird diese von dem Roboter 2 durch Rotation und/oder Translation des Roboterarms 2a an die genau definierte Position eines der Vermittlungsorte 12.1, 12.2 weitergeleitet. Insbesondere kann die genau definierte Position des jeweiligen Vermittlungsorts 12.1, 12.2 in einem definierten Muster variieren, welches beispielsweise von der Warenklasse oder Nummer der Warenentnahme abhängt. Ebenso kann in einem definierten Muster zwischen den Vermittlungsorten 12.1, 12.2 unterschiedlicher Zonen 5.1, 5.2 variiert werden.

Der dem Vermittlungsort 12.1, 12.2 zugeordnete Roboter 6.1, 6.2 in der Zone 5.1, 5.2 greift nun auf die Warenmenge 4c zu, entweder durch Direktübergabe zwischen den Roboterarmen 2a und 6.1a, 6.2a oder durch Ansteuern der in dem Bereich 7.1c, 7.2c abgelegten Warenmenge 4c. Im nächsten Verfahrensschritt sortiert er die Warenmenge 4c in einen der Bereiche der Regalwände 7.1, 8.1, 9.1, 10.1, 7.2, 8.2, 9.2, 10.2 in genau definierter Position ein, welche jeweils einer bestimmten Warenklasse zugeordnet sind. Das Einsortieren kann auch gemäß einer vorgegebenen Ein-/Auslagerungsstrategie erfolgen.

Das oben beschriebene Verfahren wird so lange fortgesetzt, bis ein konkreter Kommissionierauftrag vorliegt. In diesem Fall wird eine auftragsgemäße Soll-Menge 4d von dem Roboter 6.1, 6.2 aus dem/den jeweiligen Bereich(en) der Regalwände entnommen, in denen die zu kommissionierenden Waren bereits entpackt und sortiert in genau definierter Position vorliegen, so dass ein schneller Zugriff möglich ist. Mittels des Roboterarms 6.1a, 6.2a werden die Soll-Mengen 4d der Waren in einen der Zielladungsträger 14 eingefüllt und die abgefüllten Zielladungsträger 14a durch das Förderband 13 an einen Bestimmungsort gefördert.

### Bezugszeichenliste

- 1: Kommissionieranlage
- 2: erster Roboter
- 2a: Roboterarm
- 2b: Schutzraum
- 2c: Zugang
- 3: Förderband
- 4: Quelladungsträger
- 4a, 4b: Waren unterscheidbarer Warenklassen
- 4c: entnommene Warenmenge
- 4d: Soll-Menge von Waren
- 5.1, 5.2: Zonen
- 6.1, 6.2: zweite Roboter
- 7.1, 7.2: Regalwände
- 7.1a-c, 7.2a-c: Bereiche in den Regalwänden
- 8.1, 8.2: Regalwände
- 9.1, 9.2: Regalwände
- 10.1, 10.2: Regalwände
- 11.1, 11.2: Zugang
- 12.1, 12.2: Vermittlungsorte
- 13: Förderband
- 14: Ladungsträger
- 14a: mit Soll-Menge abgefüllter Zielladungsträger

## Patentansprüche

1. Verfahren zum Kommissionieren von Waren (4a, 4b) unterscheidbarer Warenklassen mit wenigstens zwei Kommissioniereinheiten, wobei die Waren (4a, 4b) an einem Quellort bereitgestellt und Soll-Mengen von Waren (4a, 4b) für einen Zielort zusammengestellt werden, wobei von wenigstens einer ersten Kommissioniereinheit Warenmengen von dem Quellort entnommen und diese an wenigstens einen Vermittlungsort weitergeleitet werden, an welchem jeweils wenigstens eine zweite Kommissioniereinheit auf die Waren (4a, 4b) zugreift, welche das Zusammenstellen der Soll-Mengen der Waren (4a, 4b) ausführt, wobei die wenigstens eine zweite Kommissioniereinheit jeweils die an den jeweiligen Vermittlungsort weitergeleiteten Warenmengen in Sortierbereiche einordnet und die Soll-Mengen aus den Waren (4a, 4b) in den jeweiligen Sortierbereichen zusammenstellt, **dadurch gekennzeichnet, dass** die zweite Kommissioniereinheit die Soll-Mengen aus den Waren (4a, 4b) in Abhängigkeit von Kommissionieraufträgen in einem Einzelgriff oder in einem Mehrfachgriff aus den als internes Pufferlager ausgebildeten Sortierbereichen entnimmt und die aus den Sortierbereichen entnommenen Waren (4a, 4b) in Abhängigkeit der Kommissionieraufträge in einen zugeordneten Zielladungsträger einordnet und zusammenstellt.

2. Verfahren nach Anspruch 1, **dadurch gekennzeichnet, dass** vor dem Entnehmen jeweils einer der Warenmengen die Entnahmeposition und/oder die Warenklasse(n) der Waren (4a, 4b) von der wenigstens einen ersten Kommissioniereinheit ermittelt wird.

3. Verfahren nach Anspruch 1 oder 2, **dadurch gekennzeichnet, dass** die Anzahl und/oder die Warenklasse(n) von Waren (4a, 4b) einer jeweils von dem Quellort entnommenen Warenmenge unabhängig von den zu kommissionierenden Soll-Mengen und/oder Warenklassen ist/sind.

4. Verfahren nach einem der Ansprüche 1 bis 3, **dadurch gekennzeichnet, dass** die entnommenen Warenmengen an mehrere unterschiedliche Vermittlungsorte weitergeleitet werden, an welchen jeweils wenigstens eine zweite Kommissioniereinheit auf die Waren (4a, 4b) zugreift.

5. Verfahren nach einem der Ansprüche 1 bis 4, **dadurch gekennzeichnet, dass** die entnommenen Warenmengen in einem vorgegebenen Muster weitergeleitet werden, welches von der Warenklasse und/oder der Reihenfolge des Entnehmens und/oder dem Vermittlungsort der Waren (4a, 4b) abhängt.

6. Verfahren nach einem der Ansprüche 1 bis 5, **dadurch gekennzeichnet, dass** das Bereitstellen der Waren (4a, 4b) an dem Quellort und/oder das Weiterleiten der entnommenen Warenmengen an den wenigstens einen Vermittlungsort kontinuierlich, beispielsweise über ein Förderband (3), erfolgt.

7. Verfahren nach einem der Ansprüche 1 bis 6, **dadurch gekennzeichnet, dass** die entnommenen Warenmengen von der wenigstens einen ersten Kommissioniereinheit an die wenigstens eine zweite Kommissioniereinheit direkt übergeben werden.

8. Verfahren nach einem der Ansprüche 1 bis 7, **dadurch gekennzeichnet, dass** jeder der zweiten Kommissioniereinheiten jeweils eigene Sortierbereiche zugeordnet sind.

9. Verfahren nach einem der Ansprüche 1 bis 7, **dadurch gekennzeichnet, dass** das Einordnen der weitergeleiteten Warenmengen in Sortierbereiche in Abhängigkeit der Warenklassen erfolgt.

10. Verfahren nach Anspruch 8 oder 9, **dadurch gekennzeichnet, dass** das Einordnen und Zusammenstellen der Waren (4a, 4b) in bzw. aus den Sortierbereichen gemäß einer vorgegebenen Ein- und Auslagerungsstrategie, insbesondere A,B,C-Artikel, Warengleichverteilung, FIFO oder Füllgradsregelung, und/oder in Abhängigkeit von den Kommissionieraufträgen erfolgt.

11. Verfahren nach einem der Ansprüche 1 bis 10, **dadurch gekennzeichnet, dass** die zweite Kommissioniereinheit einen Roboterarm (6.1 a, 6.2a) aufweist und mittels des Roboterarms (6.1 a, 6.2a) die Soll-Mengen der Waren (4a, 4b) in den Zielladungsträger (14a) eingefüllt und die abgefüllten Zielladungsträger (14a) durch ein Förderband (13) an einen Bestimmungsort gefördert werden.

12. Verfahren nach einem der Ansprüche 1 bis 11, **dadurch gekennzeichnet, dass** die Zielladungsträger (14a) von der wenigstens einen zweiten Kommissioniereinheit beispielsweise mittels eines Greifers mitgeführt werden.

## Claims

1. Method for picking goods (4a, 4b) of distinguishable goods classes by means of at least two picking units, wherein the goods (4a, 4b) are supplied at a source location and the desired amounts of goods (4a, 4b) are assembled for a target location, wherein by means of at least one first picking unit amounts of goods are removed from the source location and the latter are conveyed to at least one distribution point, at which at least one second picking unit has access to the goods (4a, 4b) and carries out the assembly of the desired amounts of goods (4a, 4b), wherein the at least one second picking unit sorts the amounts of goods conveyed to the respective distribution point into sorting areas and assembles the desired amounts of goods (4a, 4b) in the respective sorting areas, **characterised in that** the second picking unit removes the desired amounts of goods (4a, 4b) according to picking orders by means of a single grip operation or by means of a multiple grip operation from the sorting areas designed as an internal buffer store, and the goods (4a, 4b) removed from the sorting areas according to the picking orders are sorted into an assigned target loading carrier and assembled.

2. Method according to claim 1, **characterised in that** before the removal of one of the amounts of goods the removal position and/or the class(es) of the goods (4a, 4b) is/are determined by the at least one first picking unit.

3. Method according to claim 1 or 2, **characterised in that** the number and/or the class(es) of goods (4a, 4b) of an amount of goods removed from the source location respectively is/are independent of the desired amounts and/or goods classes to be picked.

4. Method according to any one of claims 1 to 3, **characterised in that** the removed amounts of goods are conveyed to a plurality of different distribution points, at which at least one second picking unit has access to the goods (4a, 4b) respectively.

5. Method according to any one of claims 1 to 4, **characterised in that** the removed amounts of goods (4a, 4b) are conveyed in a predefined pattern which is dependent on the goods class (4a, 4b) and/or the sequence of removal and/or distribution point of the goods (4a, 4b).

6. Method according to any one of claims 1 to 5, **characterised in that** the supply of goods (4a, 4b) at the source location and/or the conveying of the removed amounts of goods (4a, 4b) to the at least one distribution point is performed continually, for example by means of a conveyor belt (3).

7. Method according to any one of claims 1 to 6, **characterised in that** the removed amounts of goods (4a, 4b) are transferred directly from the at least one first picking unit to the at least one second picking unit.

8. Method according to any one of claims 1 to 7, **characterised in that** separate sorting areas are assigned to each of the second picking units respectively.

9. Method according to any one of claims 1 to 7, **characterised in that** the sorting of the conveyed amounts of goods into sorting areas is performed according to the goods classes.

10. Method according to claim 8 or 9, **characterised in that** the sorting and assembly of goods (4a, 4b) into or out of the sorting areas is performed according to a prespecified depositing and removal strategy, in particular ABC articles, uniform distribution of goods, FIFO or filling level control and/or as a function of the picking orders.

11. Method according to any one of claims 1 to 10, **characterised in that** the second picking unit comprises a robot arm (6.1a, 6.2a) and by means of the robot arm (6.1a, 6.2a) the desired amounts of goods (4a, 4b) are filled into the target loading carrier (14a) and the filled target loading carriers (14a) are conveyed by a conveyor belt (13) to a destination point.

12. Method according to any one of claims 1 to 11, **characterised in that** the target loading carriers (14a) are carried along by the a least one second picking unit, for example by means of a gripper.

## Revendications

1. Procédé de commissionnement de produits (4a, 4b) de classes de produits différenciables, comportant au moins deux unités de commissionnement, dans lequel les produits (4a, 4b) sont mis à disposition sur un site source, et des quantités requises de produits (4a, 4b) sont regroupées pour un site cible, des quantités de produits d'au moins une première unité de commissionnement étant prélevées hors du site source et celles-ci étant transmises à au moins un site de transmission au niveau duquel au moins une deuxième unité de commissionnement respective a accès aux produits (4a, 4b), qui exécute le regroupement de la quantité requise des produits (4a, 4b), ladite au moins une deuxième unité de commissionnement classant respectivement les quantités de produits transmises au lieu de transmission respectif dans des zones de triage et regroupe les quantités requises parmi les produits (4a, 4b) dans les zones de triage respectives, **caractérisé en ce que** la deuxième unité de commissionnement prélève les quantités requises parmi les produits (4a, 4b) en fonction des ordres de commissionnement par une préhension unique ou par une préhension multiple hors des zones de triage réalisées en tant qu'entrepôt tampon interne, et les produits (4q, 4b) prélevés hors des zones de triage sont classés et regroupés en fonction des ordres de commissionnement dans un support de chargement cible associé.

2. Procédé selon la revendication 1, **caractérisé en ce qu'**avant le prélèvement d'une des quantités de produits respective, la position de prélèvement et/ou la(les) classe(s) des produits (4a, 4b) est/sont déterminée(s) par ladite au moins une première unité de commissionnement.

3. Procédé selon la revendication 1 ou 2, **caractérisé en ce que** le nombre et/ou la(les) classe(s) de produits (4a, 4b) d'une quantité de produits respective prélevée du site source est/sont indépendant(s)/indépendante(s) des quantités requises et/ou des classes de produits à commissionner.

4. Procédé selon l'une des revendications 1 à 3, **caractérisé en ce que** les quantités de produits prélevées sont transmises à plusieurs sites de transmission différents au niveau desquels au moins une deuxième unité de commissionnement respective a accès aux produits (4a, 4b).

5. Procédé selon l'une des revendications 1 à 4, **caractérisé en ce que** les quantités de produits prélevées sont transmises selon un schéma prédéterminé qui dépend de la classe de produits et/ou l'ordre du prélèvement et/ou du site de transmission des produits (4a, 4b).

6. Procédé selon l'une des revendications 1 à 5, **caractérisé en ce que** la mise à disposition des produits (4a, 4b) est effectuée au niveau du site source et/ou la transmission des quantités de produits prélevées est effectuée au niveau dudit au moins un site de transmission, de manière continue, par exemple par l'intermédiaire d'un tapis roulant (3).

7. Procédé selon l'une des revendications 1 à 6, **caractérisé en ce que** les quantités de produits prélevées sont remises directement par ladite au moins première unité de commissionnement à ladite au moins deuxième unité de commissionnement.

8. Procédé selon l'une des revendications 1 à 7, **caractérisé en ce qu'**à chacune des deuxièmes unités de commissionnement sont associées des zones de triages propres respectives.

9. Procédé selon l'une des revendications 1 à 7, **caractérisé en ce que** le classement des quantités de produits transmises est effectué dans des zones de triage en fonction des classes de produits.

10. Procédé selon la revendication 8 ou 9, **caractérisé en ce que** le classement et le regroupement des produits (4a, 4b) dans les zones de triage ou hors des zones de triage, respectivement, sont effectués selon une stratégie prédéterminée d'entrée et de sortie, en particulier une analyse ABC, une répartition égale des produits, un principe FIFO ou une règle du degré de remplissage et/ou en fonction des ordres de commissionnement.

11. Procédé selon l'une des revendications 1 à 10, **caractérisé en ce que** la deuxième unité de commissionnement présente un bras de robot (6.1 a, 6.2a) et **en ce qu'**au moyen du bras de robot (6.1 a, 6.2a), les quantités requises des produits (4a, 4b) sont remplies dans les supports de chargement cibles (14a), et les supports de chargement cibles (14a) remplis sont transportés par un tapis roulant (13) jusqu'à un site de destination.

12. Procédé selon l'une des revendications 1 à '11, **caractérisé en ce que** les supports de chargement cibles (14a) sont entraînés par ladite au moins une deuxième unité de commissionnement par exemple au moyen d'un préhenseur.
